# EUROPEAN PATENT APPLICATION

(11) **EP 0 765 801 A1**
(43) Date of publication of application: **02.04.1997**
(21) Application number: 96830483.2
(22) Date of filing: 27.09.1996
(51) Int. Cl.: B62M 1/12

(54) **A manual drive for a bicycle or the like**

(30) Priority: 29.09.1995 IT CT950017
(71) Applicant: Finocchiaro, Mario, 95014 Giarre (Catania) (IT)
(72) Inventor: Finocchiaro, Mario, 95014 Giarre (Catania) (IT)
(74) Representative: Gristina, Giorgio

(57) **Abstract**

A manual drive for a bicycle or the like, comprising a handle bar and a steering column (2), the handle bar comprising a hollow tubular body (1) with two handling extremities and integral with said column,
characterized in that it comprises
a rotary motion intake means (4) arranged inside said handle bar body;
two means (5,5') for imparting rotary motion to said rotary motion intake means, respectively arranged on said handling extremities of the handle bar, and
means (6,6') for trasmitting the rotary motion of said rotary motion intake means to the front or rear wheel of the bicycle itself.

## Description

The present invention generally relates to the field of pedal drive locomotion means, and more particularly, though not exclusively, to that of bicycles.

In the field of bicycles and similar pedal drive locomotion means, such as tricycles, light carriages and so on, the driving action of the man who uses the means itself is performed by the legs on the pedals, as is known.

The present invention starts from the consideration of the fact that in the traditional bicycles the hands perform an action for only controlling the direction of the means, whereby their potential driving force is not utilized.

Then, the object of the present invention is to provide a pedal drive locomotion means wherein the force of the arms can be utilized too, whilst maintaining the direction control action of the hands.

Therefore, the subject of the present invention is a pedal drive locomotion means, particularly a bicycle, comprising a handle bar and a steering column, the handle bar comprising a hollow tubular body with two handling extremities and integral with said column,
characterized in that it comprises
a rotary motion intake means arranged inside said handle bar body;
two means for imparting rotary motion to said rotary motion intake means, respectively arranged on said handling extremities of the handle bar, and
means for trasmitting the rotary motion of said rotary motion intake means to the front or rear wheel of the pedal drive locomotion means itself.

The advantage of the present invention is that a bicycle according to its teaching can be used by a person who does not have the functionality of legs too; it will give the possibility anyhow of a more complete physical exercise; it will allow those who do agonistics to achieve better performance results, by virtue of the addition of the force of the arms to that of the legs.

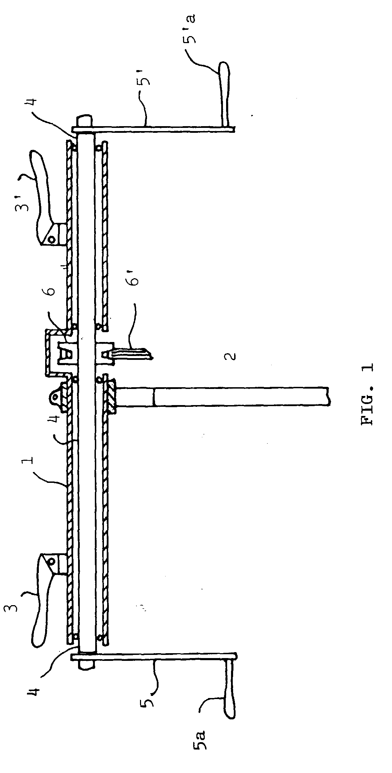

The present invention will be best understood based upon the following detailed disclosure of its preferred embodiment, given only as a matter of example, absolutely not of restriction, with reference to the annexed drawing, the only FIGURE 1 whereof represents a handle bar according to the present invention in section.

As depicted in FIGURE 1, a handle bar according to the teaching of the present invention comprises a tubular body 1 that acts a s a support, fixed on the steering column 2. On the same support the brake levers 3, 3' are assembled. Inside the support, a suitably guided shaft (intake rotary motion means) 4 is mounted, which bears, integral thereto at its two extremities, cranks 5, 5' aligned to each other. Respective rotary handles 5a, 5'a are fixed to the two cranks. Integral with the shaft 4, a pulley or gear wheel 6 is assembled, that guides a chain 6' that goes to mount itself in another pulley arranged in the hub of front wheel or at the axle of the pedals.

It is essential that the movements imparted by the arms and the legs are synchronized.

In the case of the front wheel rendered a drive wheel by virtue of its receiving the movement of the arms, not even the transmission of such a movement through a further change-speed gear would allow to match the speed ratios so that a turn of the pedals or the pedal cranks corresponds to a turn of the rotary shaft mounted in the handle bar. This synchronism would be, in fact, purely theoretic, because the wheels of a bicycle, though having the same diametre should have the same development, but practically, as a greater weight rests on the rear wheel, this one would get squashed, at each turn on the road determining a lesser development, which in turn causes a phase-displacement between the movement of the arms and that of the legs.

To obviate this problem the inventor of the present application has devised the following contrivance.

The handle connection, or column, bears a seat (not represented in the drawing) where a knuckle-joint, commercially available, is seated. The articulation axis of such a joint coincides with the axis of rotation of the steering. The knuckle-joint is made up of two hubs that have the feature of being capable of going out of alignment with each other, though rotating together. In this way a part of the knuckle-joint remains parallel to the axis of the rotating handle bar in the steering phase too, and receives its motion through a chain; the other part of the knuckle joint that always remains aligned with the axis of the pedal cranks trasmits to this one the recevide rotary motion. A free wheel causes the action of the legs not to be transmitted to the rotating shaft in the handle bar, but vice-versa it can receive the action of it.

The present invention has been disclosed and depicted with reference to a preferred embodiment thereof, but it is to be expressely understood that variations, Additions and/or omissions can be made, without so departing from the relevant protection scope, that remains defined only by the appended claims.

## Claims

1. A pedal drive locomotion means, particularly a bicycle, comprising a handle bar and a steering column, the handle bar comprising a hollow tubular body with two handling extremities and integral with said column,
characterized in that it comprises
a rotary motion intake means arranged inside said handle bar body;
two means for imparting rotary motion to said rotary motion intake means, respectively arranged on said handling extremities of the handle bar, and
means for trasmitting the rotary motion of said rotary motion intake means to the front or rear wheel of the pedal drive locomotion means itself.

2. The means according to claim 1, wherein said rotary motion intake means are made up of a shaft.

3. A means according to claim 1 or 2, wherein said means for imparting rotary motion are made up of respective cranks with relevant handles.
